# EUROPEAN PATENT APPLICATION

(11) **EP 4 432 733 A1**
(43) Date of publication of application: **18.09.2024**
(21) Application number: 22892944.4
(22) Date of filing: 09.02.2022
(51) Int. Cl.: H04W 48/02, H04W 48/10, H04W 76/27

(54) **TERMINAL OPERATING METHOD AND APPARATUS IN WIRELESS COMMUNICATION SYSTEM**

(30) Priority: 11.11.2021 KR 20210154997
(71) Applicant: LG Electronics Inc., Yeongdeungpo-gu Seoul 07336 (KR)
(72) Inventor: PARK, Sangmin, Seoul 06772 (KR); KIM, Hyun Sook, Seoul 06772 (KR)
(74) Representative: Mooser, Sebastian Thomas
(86) International application number: PCT/KR2022/001999
(87) International publication number: WO 2023/085521

(57) **Abstract**

A method of operating a terminal in a wireless communication system may comprise receiving a system information block (SIB) transmitted from a base station, determining an access category (AC) value based on a type of access attempt of the terminal, and performing an access attempt based on information included in the SIB and the AC value.

## Description

### Technical Field

The following description relates to a wireless communication system and a method and apparatus for operating a terminal. Specifically, it relates to a method and apparatus for processing an access category for an access attempt of a terminal.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and apparatus for operating a terminal in a wireless communication system.

The present disclosure relates to a method and apparatus for solving a under barring problem when the release applied to a terminal and the release applied to a network are different in a wireless communication system.

The present disclosure relates to a method and apparatus for providing access category information in consideration of a standardized access category that is differently defined depending on the release in a wireless communication system.

The present disclosure can provide a method and apparatus for allowing terminal access through network congestion control in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating a terminal in a wireless communication system may comprise receiving a system information block (SIB) transmitted from a base station, determining an access category (AC) value based on a type of access attempt of the terminal and performing an access attempt based on information included in the SIB and the AC value.

As an example of the present disclosure, a terminal operating in a wireless communication system may comprise at least one transceiver, at least one processor and at least one memory operably connected to the at least one processor and storing instructions that, when executed, cause the at least one processor to perform a specific operation. The specific operation may comprise controlling the transceiver to receive a system information block (SIB) transmitted from a base station, determining an access category (AC) value based on a type of access attempt of the terminal and performing an access attempt based on information included in the SIB and the AC value.

As an example of the present disclosure, a method of operating a base station in a wireless communication system may comprise transmitting a system information block (SIB) to a terminal and receiving an access attempt request from the terminal. The terminal may determine an access category (AC) value based on a type of access attempt of the terminal and receive the access attempt request from the terminal based on information included in the SIB and the AC value.

As an example of the present disclosure, a network operating in a wireless communication system may comprise at least one transceiver, at least one processor and at least one memory operably connected to the at least one processor and storing instructions that, when executed, cause the at least one processor to perform a specific operation. The specific operation may comprise controlling the transceiver to transmit a system information block (SIB) to a terminal and controlling the transceiver to receive an access attempt request from the terminal. The terminal may determine an access category (AC) value based on a type of access attempt of the terminal and receive the access attempt request from the terminal based on information included in the SIB and the AC value.

As an example of the present disclosure, an apparatus may comprise at least one memory and at least one processor functionally connected to the at least one memory. The at least one processor may control the apparatus to receive a system information block (SIB) transmitted from a base station, determine an access category (AC) value based on a type of access attempt of the apparatus, and perform an access attempt based on information included in the SIB and the AC value.

As an example of the present disclosure, a non-transitory computer-readable medium storing at least one instruction may comprise the at least one instruction executable by a processor. The at least one instruction may perform control to receive a system information block (SIB) transmitted from a base station, determine an access category (AC) value based on a type of access attempt of an apparatus, and perform an access attempt based on information included in the SIB and the AC value.

Additionally, the following matters may be commonly applied.

As an example of the present disclosure, the SIB may comprise unified access category (UAC) barring information and allowed standardized AC list information

As an example of the present disclosure, the UAC barring information may comprise at least one of at least one AC information to which barring is applied or barring factor information or barring time information of each of the at least one AC information.

As an example of the present disclosure, the barring factor information of each of the at least one AC information may be probability information of the access attempt of the terminal based on the AC, and the barring time information of each of the at least one AC information may be time information when the access attempt of the terminal is barred based on the AC.

As an example of the present disclosure, the allowed standardized AC list information may be configured based on an AC supported and implemented in a network, and the access attempt of the terminal based on the AC corresponding to the allowed standardized AC list may be always allowed.

As an example of the present disclosure, based on the AC value being a first AC value based on the type of access attempt of the terminal, the terminal may check whether the first AC value is included in the UAC barring information.

As an example of the present disclosure, based on the first AC value being included in the UAC barring information, the access attempt may be performed based on barring factor information of the first AC value included in the UAC barring information and barring time information of the first AC value.

As an example of the present disclosure, based on the first AC value being not included in the UAC barring information, the terminal may check whether the first AC value is included in the allowed standardized AC list.

As an example of the present disclosure, based on the first AC value being included in the allowed standardized AC list, the access attempt of the terminal based on the first AC value may be allowed.

As an example of the present disclosure, based on the first AC value being not included in the allowed standardized AC list, the access attempt of the terminal corresponding to the first AC value may be barred.

As an example of the present disclosure, based on the access attempt of the terminal corresponding to the first AC value being barred, a barring time for the access attempt of the terminal corresponding to the first AC value may be set to a random value of preconfigured values.

As an example of the present disclosure, the SIB may be SIB1.

### Advantageous Effects

The present disclosure can provide a method and apparatus for operating a terminal in a wireless communication system.

The present disclosure has the effect of solving a under barring problem when the release applied to a terminal and the release applied to a network are different in a wireless communication system.

The present disclosure has the effect of performing network congestion control by providing access category information in consideration of a standardized access category that is differently defined depending on the release in a wireless communication system.

The present disclosure has the effect of allowing a terminal to access a network efficiently through network congestion control in a wireless communication system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view illustrating various reference points.
FIG. 2 is a view illustrating an example of a network structure of an evolved universal terrestrial radio access network (E-UTRAN) to which the present disclosure is applicable.
FIG. 3 is a view illustrating a general E-URTAN and an example of an architecture of an evolved packet core (EPC).
FIG. 4 is a view illustrating an example of a structure of a radio interface protocol in a control plane between user equipment (UE) and evolved node B (eNB).
FIG. 5 is a view illustrating an example of a structure of a radio interface protocol in a user plane between UE and eNB.
FIG. 6 is a view illustrating an example of an architecture of a general new radio (NR)-radio access network (RAN).
FIG. 7 is a view illustrating an example of functional separation of a general NG-RAN and a 5th generation core (5GC).
FIG. 8 is a view illustrating an example of a general architecture of a 5th generation (5G) system.
FIG. 9 is a view illustrating an example of a wireless device applicable to the present disclosure.
FIG. 10 is a flowchart illustrating an operation method applied to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit" "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station" "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

### 3GPP LTE/EPS

3GPP TS 36.211: Physical channels and modulation
3GPP TS 36.212: Multiplexing and channel coding
3GPP TS 36.213: Physical layer procedures
3GPP TS 36.214: Physical layer; Measurements
3GPP TS 36.300: Overall description
3GPP TS 36.304: User Equipment (UE) procedures in idle mode
3GPP TS 36.306: User Equipment (UE) radio access capabilities
3GPP TS 36.314: Layer 2 - Measurements
3GPP TS 36.321: Medium Access Control (MAC) protocol
3GPP TS 36.322: Radio Link Control (RLC) protocol
3GPP TS 36.323: Packet Data Convergence Protocol (PDCP)
3GPP TS 36.331: Radio Resource Control (RRC) protocol
3GPP TS 36.413: S1 Application Protocol (S1AP)
3GPP TS 36.423: X2 Application Protocol (X2AP)
3GPPP TS 22.125: Unmanned Aerial System support in 3GPP; Stage 1
3GPP TS 23.303: Proximity-based services (Prose); Stage 2
3GPP TS 23.401: General Packet Radio Service (GPRS) enhancements for Evolved Universal Terrestrial Radio Access Network (E-UTRAN) access
3GPP TS 23.402: Architecture enhancements for non-3GPP accesses
3GPP TS 23.286: Application layer support for V2X services; Functional architecture and information flows
3GPP TS 24.301: Non-Access-Stratum (NAS) protocol for Evolved Packet System (EPS); Stage 3
3GPP TS 24.302: Access to the 3GPP Evolved Packet Core (EPC) via non-3GPP access networks; Stage 3
3GPP TS 24.334: Proximity-services (ProSe) User Equipment (UE) to ProSe function protocol aspects; Stage 3
3GPP TS 24.386: User Equipment (UE) to V2X control function; protocol aspects; Stage 3

### 3GPP NR/5GS

3GPP TS 38.211: Physical channels and modulation
GPP TS 38.212: Multiplexing and channel coding
3GPP TS 38.213: Physical layer procedures for control
3GPP TS 38.214: Physical layer procedures for data
3GPP TS 38.215: Physical layer measurements
3GPP TS 38.300: NR and NG-RAN Overall Description
3GPP TS 38.304: User Equipment (UE) procedures in idle mode and in RRC inactive state
3GPP TS 38.321: Medium Access Control (MAC) protocol
3GPP TS 38.322: Radio Link Control (RLC) protocol
3GPP TS 38.323: Packet Data Convergence Protocol (PDCP)
3GPP TS 38.331: Radio Resource Control (RRC) protocol
3GPP TS 37.324: Service Data Adaptation Protocol (SDAP)
3GPP TS 37.340: Multi-connectivity; Overall description
3GPP TS 23.501: System Architecture for the 5G System
3GPP TS 23.502: Procedures for the 5G System
3GPP TS 23.503: Policy and Charging Control Framework for the 5G System; Stage 2
3GPP TS 24.501: Non-Access-Stratum (NAS) protocol for 5G System (5GS); Stage 3
3GPP TS 24.502: Access to the 3GPP 5G Core Network (5GCN) via non-3GPP access networks
3GPP TS 24.526: User Equipment (UE) policies for 5G System (5GS); Stage 3

### 3GPP V2X

3GPP TS 23.285: Architecture enhancements for V2X services
3GPP TR 23.786: Evolved Packet System (EPS) and the 5G System (5GS) to support advanced V2X services
3GPP TS 23.287: Architecture enhancements for 5G System (5GS) to support Vehicle-to-Everything (V2X) services
3GPP TS 24.587: Vehicle-to-Everything (V2X) services in 5G System (5GS); Protocol aspects; Stage 3
3GPP TS 24.588: Vehicle-to-Everything (V2X) services in 5G System (5GS); User Equipment (UE) policies; Stage 3

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

### Overview of 3GPP System

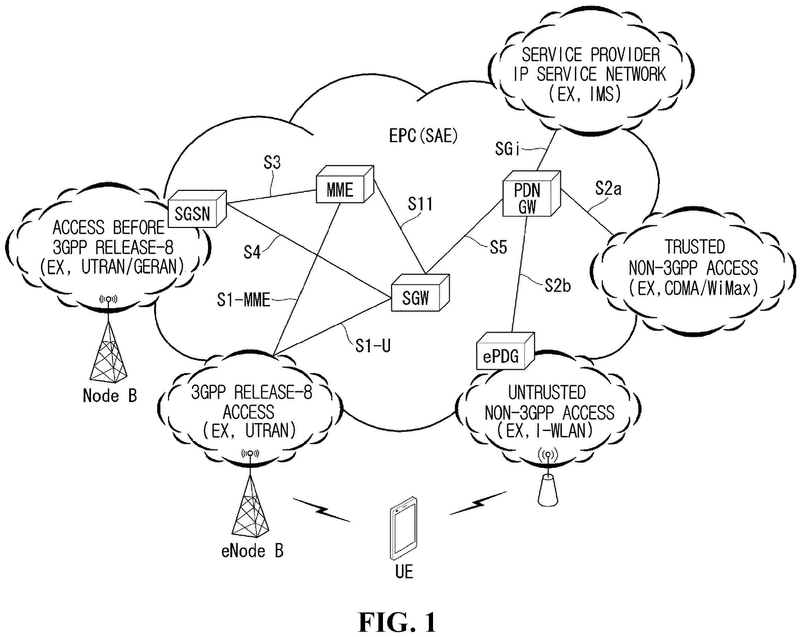

FIG. 1 illustrates various reference points.

An example of the network structure of FIG. 1 discloses an LTE/EPS-based network structure, and may operate with reference to matters described in standard documents published before this document. In the network structure of FIG. 1, at least one of SGW, PDN GW, MME, SGSN, and ePDG entities may operate with reference to matters described in standard documents published before this document. In addition, S1-MME, S1-U, S2a, S2b, S3, S4, S5, S11, and SGi may exist as interfaces between each entity, which are described in the standard document published before this document. can do. In addition, other entities and interfaces may be configured with reference to matters described in standard documents published before this document described above, and are not limited to specific forms.

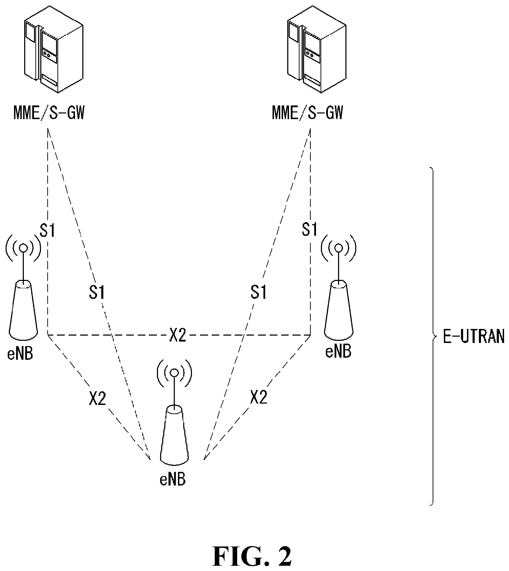

FIG. 2 illustrates an example of a network structure of an evolved universal terrestrial radio access network (E-UTRAN) to which the present disclosure is applicable.

An E-UTRAN system is an evolved version of the existing UTRAN system and may be, for example, 3GPP LTE/LTE-A system. Communication networks are widely deployed to provide various communication services such as voice (e.g., voice over Internet protocol (VoIP)) through IMS and packet data.

Referring to FIG. 2, an E-UMTS network includes an E-UTRAN, an EPC, and one or more UEs. The E-UTRAN consists of eNBs that provide control plane and user plane protocols to the UE, and the eNBs are interconnected with each other by means of the X2 interface, and reference may be made to matters described in standard documents published before this document.

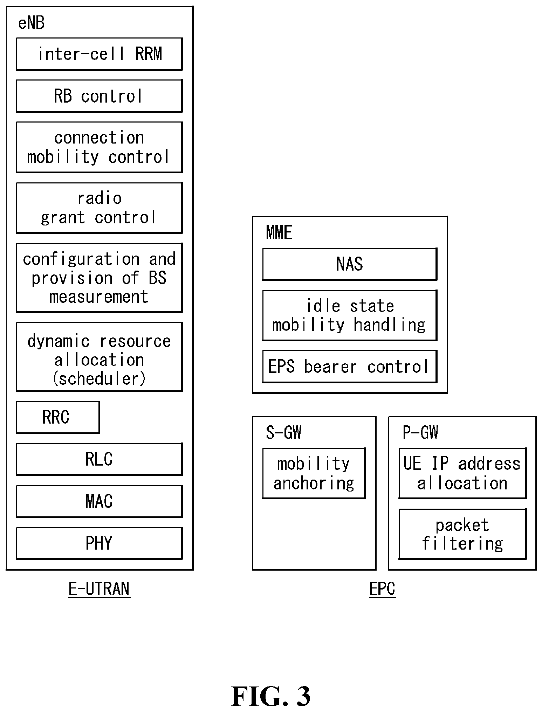

FIG. 3 is a view illustrating a general E-URTAN and an example of an architecture of an evolved packet core (EPC).

As illustrated in FIG. 3, the eNB can perform functions such as routing to gateway while radio resource control (RRC) connection is activated, scheduling and transmission of paging messages, scheduling and transmission of a broadcast channel (BCH), dynamic allocation of resources in uplink and downlink to the UE, configuration and provision for the measurement of the eNB, radio bearer control, radio admission control, and connection mobility control. The eNB can perform functions such as paging situation in the EPC, management of an LTE IDLE state, ciphering of a user plane, SAE bearer control, and ciphering and integrity protection of NAS signaling.

Annex J of 3GPP TR 23.799 shows various architectures combining 5G and 4G. And 3GPP TS 23.501 shows an architecture using NR and NGC.

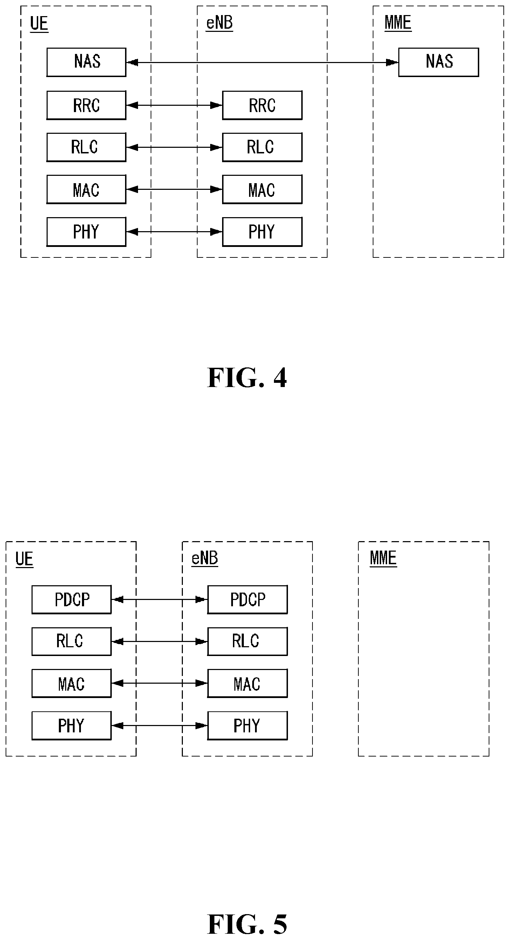

FIG. 4 is a view illustrating an example of a structure of a radio interface protocol in a control plane between user equipment (UE) and evolved node B (eNB), and FIG. 5 is view illustrating an example of a structure of a radio interface protocol in a user plane between UE and eNB.

The radio interface protocol is based on 3GPP radio access network standard. The radio interface protocol horizontally consists of a physical layer, a data link layer, and a network layer, and is vertically divided into a user plane for data information transmission and a control plane for control signaling delivery.

The protocol layers may be divided into L1 (first layer), L2 (second layer), and L3 (third layer) based upon three lower layers of an open system interconnection (OSI) standard model that is well known in the art of communication systems, and it is possible to refer to the matters described in the standard document published before this document described above.

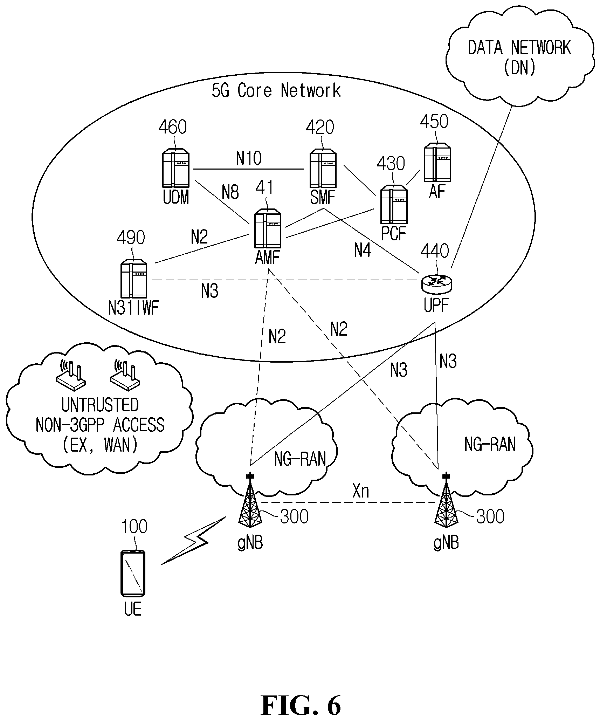

FIG. 6 is a view illustrating an example of a wireless communication system that is applied to the present disclosure.

5GC (5G Core) may include various components, part of which are shown in FIG. 6, including an access and mobility management function (AMF) 410, a session management function (SMF) 420, a policy control function (PCF) 430, a Prose user plane function (UPF) 440, an application function (AF) 450, unified data management (UDM) 460, and a non-3GPP interworking function (N3IWF) 490.

A UE 100 is connected to a data network via the UPF 440 through a next generation radio access network (NG-RAN) including the gNB 300. The UE 100 may be provided with a data service even through untrusted non-3GPP access, e.g., a wireless local area network (WLAN). In order to connect the non-3GPP access to a core network, the N3IWF 490 may be deployed.

The N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The AMF 410 may manage access and mobility in the 5G system. The AMF 410 may perform a function of managing (non-access stratum) NAS security. The AMF 410 may perform a function of handling mobility in an idle state.

The UPF 440 performs a function of gateway for transmitting and receiving user data. The UPF node 440 may perform the entirety or a portion of a user plane function of a serving gateway (S-GW) and a packet data network gateway (P-GW) of 4G mobile communication.

The UPF 440 is a component that operates as a boundary point between a next generation radio access network (NG-RAN) and the core network and maintains a data path between the gNB 300 and the SMF 420. In addition, when the UE 100 moves over an area served by the gNB 300, the UPF 440 serves as a mobility anchor point. The UPF 440 may perform a function of handling a PDU. For mobility within the NG-RAN (which is defined after 3GPP Release-15), the UPF 440 may route packets. In addition, the UPF 440 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 440 may correspond to a termination point of a data interface toward the data network.

The PCF 430 is a node that controls an operator's policy. The AF 450 is a server for providing various services to the UE 100. The UDM 460 is a server that manages subscriber information, such as home subscriber server (HSS) of 4G mobile communication. The UDM 460 stores and manages the subscriber information in a unified data repository (UDR).

The SMF 420 may perform a function of allocating an Internet protocol (IP) address of the UE 100. In addition, the SMF 420 may control a packet data unit (PDU) session.

For convenience of explanation, hereinafter, reference numerals may be omitted for AMF 410, SMF 420, PCF 430, UPF 440, AF 450, UDM 460, N3IWF 490, gNB 300, or UE 100, which may operate with reference to contents described in standard documents released earlier than the present document.

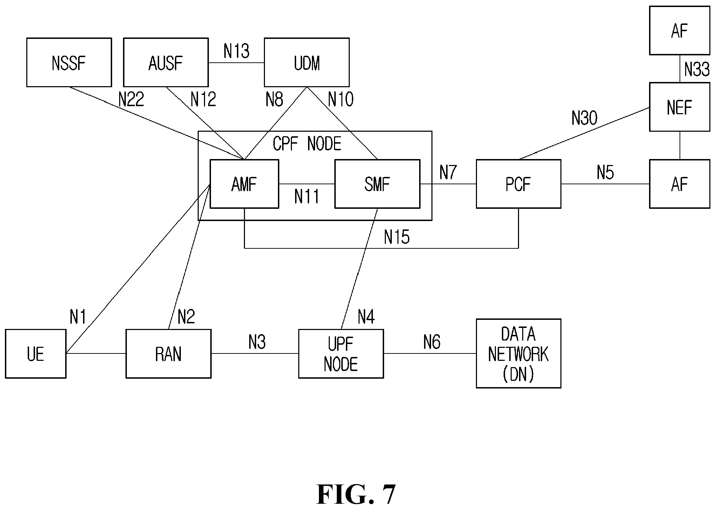

FIG. 7 is a view illustrating an example expressing a structure of a wireless communication system, which is applied to the present disclosure, from a node perspective.

Referring to FIG. 7, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 7 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

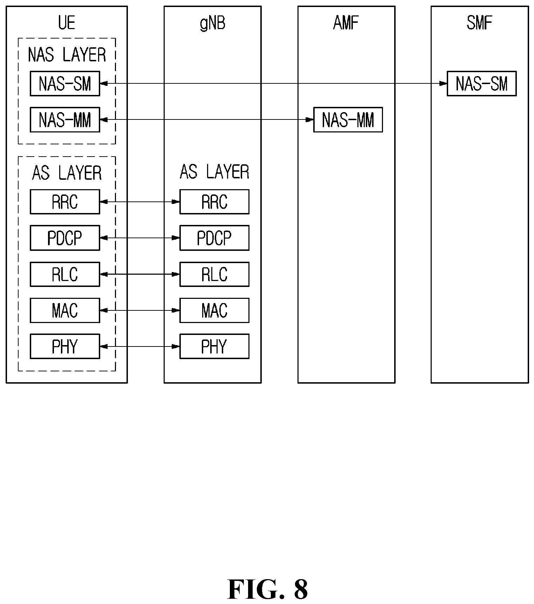

Hereinafter, the present disclosure will describe each layer of a radio protocol. FIG. 8 is a view illustrating an example of a radio interface protocol between UE and gBN.

Referring to FIG. 8, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Communication system applicable to the present disclosure

Although not limited thereto, various descriptions, functions, procedures, proposals, methods and/or operation flowcharts disclosed in the present disclosure are applicable to various fields requiring wireless communication/connection (e.g., 5G) between devices.

Hereinafter, it will be described in greater detail with reference to the drawings. In the following drawings/description, the same reference numerals may denote the same or corresponding hardware blocks, software blocks or functional blocks unless otherwise stated.

### Communication system applicable to the present disclosure

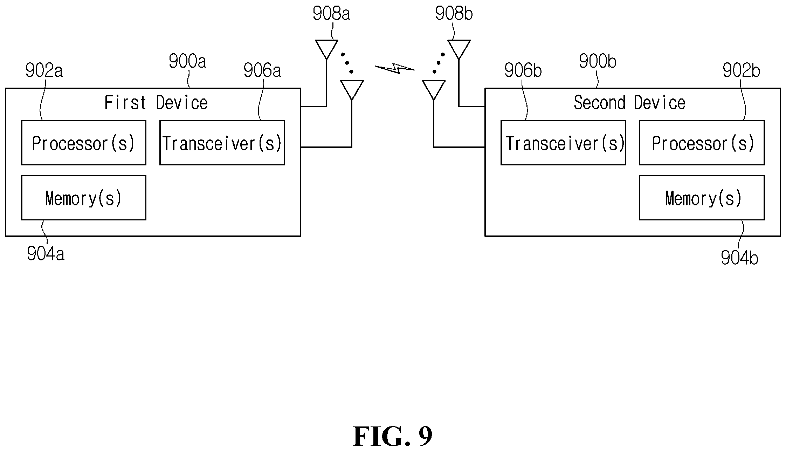

FIG. 9 is a view showing an example of a wireless device applicable to the present disclosure.

Referring to FIG. 9, a first wireless device 900a and a second wireless device 900b may transmit and receive radio signals through various radio access technologies (e.g., LTE or NR). Here, {the first wireless device 900a, the second wireless device 900b} may correspond to {the wireless device 100x, the base station 90} and/or {the wireless device 100x, the wireless device 100x}.

The first wireless device 900a may include one or more processors 902a and one or more memories 904a and may further include one or more transceivers 906a and/or one or more antennas 908a. The processor 902a may be configured to control the memory 904a and/or the transceiver 906a and to implement descriptions, functions, procedures, proposals, methods and/or operational flowcharts disclosed herein. For example, the processor 902a may process information in the memory 904a to generate first information/signal and then transmit a radio signal including the first information/signal through the transceiver 906a. In addition, the processor 902a may receive a radio signal including second information/signal through the transceiver 906a and then store information obtained from signal processing of the second information/signal in the memory 904a. The memory 904a may be coupled with the processor 902a, and store a variety of information related to operation of the processor 902a. For example, the memory 904a may store software code including instructions for performing all or some of the processes controlled by the processor 902a or performing the descriptions, functions, procedures, proposals, methods and/or operational flowcharts disclosed herein. Here, the processor 902a and the memory 904a may be part of a communication modem/circuit/chip designed to implement wireless communication technology (e.g., LTE or NR). The transceiver 906a may be coupled with the processor 902a to transmit and/or receive radio signals through one or more antennas 908a. The transceiver 906a may include a transmitter and/or a receiver. The transceiver 906a may be used interchangeably with a radio frequency (RF) unit. In the present disclosure, the wireless device may refer to a communication modem/circuit/chip.

The second wireless device 900b may include one or more processors 902b and one or more memories 904b and may further include one or more transceivers 906b and/or one or more antennas 908b. The processor 902b may be configured to control the memory 904b and/or the transceiver 906b and to implement the descriptions, functions, procedures, proposals, methods and/or operational flowcharts disclosed herein. For example, the processor 902b may process information in the memory 904b to generate third information/signal and then transmit the third information/signal through the transceiver 906b. In addition, the processor 902b may receive a radio signal including fourth information/signal through the transceiver 906b and then store information obtained from signal processing of the fourth information/signal in the memory 904b. The memory 904b may be coupled with the processor 902b to store a variety of information related to operation of the processor 902b. For example, the memory 904b may store software code including instructions for performing all or some of the processes controlled by the processor 902b or performing the descriptions, functions, procedures, proposals, methods and/or operational flowcharts disclosed herein. Herein, the processor 902b and the memory 904b may be part of a communication modem/circuit/chip designed to implement wireless communication technology (e.g., LTE or NR). The transceiver 906b may be coupled with the processor 902b to transmit and/or receive radio signals through one or more antennas 908b. The transceiver 906b may include a transmitter and/or a receiver. The transceiver 906b may be used interchangeably with a radio frequency (RF) unit. In the present disclosure, the wireless device may refer to a communication modem/circuit/chip.

In addition, the structure of a wireless device applicable to the present disclosure is not limited to FIG. 9, and may be configured in various forms. In particular, the present disclosure may be applied to a wireless device that performs an operation for transmitting and/or receiving a wireless signal, and is not limited to a specific form.

As an example, when a terminal performs an access attempt to a network, the terminal's access attempt may be performed according to a certain probability based on parameters, and through this, congestion control for network access may be performed. Specifically, when congestion occurs in a network (e.g. 5GS system), there is a need to allow or reject a specific access attempt of a terminal, and criteria may be needed to determine this. As an example, the above-mentioned criteria may be determined based on at least one of operator policies, deployment scenarios, user profiles, or available services, but may not be limited thereto.

Here, different criteria for access control may be associated with an access identity and an access category. As an example, a network (e.g., 5G system) may provide single unified access control based on the access identifier and the access category. At this time, within single unified access control, each access attempt may be categorized based on one access category and at least one access identifier.

Here, as an example, a network (e.g., 5G system) may broadcast barring control information in at least one radio access network (RAN) area. As an example, barring control information may be a list of barring parameters that are associated based on an access identifier and an access category. At this time, the terminal may determine whether to perform an access attempt based on terminal configuration information and the barring parameters in the broadcasted barring control information. For example, when a plurality of core networks share the same RAN, the RAN may individually apply access control to individual core networks. Additionally, as an example, single unified access control may be applied both when accessing the 5G core network through an existing system (E-UTRA) or when accessing the 5G core network through a new system (NR). In addition, an RRC idle terminal, an RRC inactive terminal, and an RRC connected terminal may also operate based on the single unified access control described above.

Additionally, as an example, the single unified access control may support scalability based on an additional access identifier and access category. As another example, the single unified access control may support an access category determined based on operator criteria (e.g., network slicing, application, and application server), which will be described later. Additionally, as an example, a network (e.g., 5G system) may control access of a terminal based on the operator policies. At this time, the network may control access of the terminal through barring parameters determined based on the access identifier and access category.

Here, as an example, the access identifier may be configured in the terminal based on Table 1 below, but is not limited to this. Additionally, as an example, the access category may be determined based on conditions related to the UE and type of access attempt, as shown in Table 2 below. As an example, an access attempt may be performed by selecting at least one access identifier and one access category based on Tables 1 and 2 below.

As a specific example, referring to Table 2, the access category may be set to a value of 0 to 63. At this time, 0 to 31 may be standardized access categories, and 32 to 63 may be access categories defined based on the operator.

At this time, as an example, each access category may correspond to the type of access attempt of the terminal. The access category corresponding to each type of access attempt may be determined depending on the situation in which the terminal switches from an RRC idle mode to an RRC connected mode. As an example, a NAS layer may determine a specific access category based on the access attempt of the terminal and indicate it to the RRC layer. At this time, the RRC layer may perform barring check that considers whether the access attempt is barred based on the access category and allow the access attempt of the terminal to be performed.

More specifically, the type of access attempt may be determined according to the access category number in Table 2. For example, access category number 0 may be a case where the network transmits paging and access of a terminal is performed based on this. Additionally, access category number 1 may be an access attempt of a terminal for a situation other than an emergency. Additionally, access category number 2 may be an access attempt of a terminal based on an emergency situation. Additionally, access category number 3 may be a situation in which access of the terminal is attempted in relation to signaling. In addition, access category numbers 4 to 6 are access categories related to IMS (IP Multimedia Subsystem), where access category number 4 is an access attempt based on a call, access category number 5 is an access attempt based on a video call, and access category number 6 is an access attempt related to SMS. Additionally, access category number 7 may be an access attempt for cases not included in other access categories. Additionally, access category number 8 may be an access attempt based on MO signaling.

**[Table 1]**

| Access Identity number | UE confiquration |
|---|---|
| 0 | UE is not configured with any parameters from this table |
| 1 (NOTE 1) | UE is configured for Multimedia Priority Service (MPS). |
| 2 (NOTE 2) | UE is confiqured for Mission Critical Service (MCS). |
| 3-10 | Reserved for future use |
| 11 (NOTE 3) | Access Class 11 is configured in the UE. |
| 12 (NOTE 3) | Access Class 12 is configured in the UE. |
| 13 (NOTE 3) | Access Class 13 is configured in the UE. |
| 14 (NOTE 3) | Access Class 14 is confiqured in the UE. |
| 15 (NOTE 3) | Access Class 15 is configured in the UE. |
| NOTE 1: Access identity 1 is used by UEs configured for MPS, in the PLMNs where the config uration is valid. The PLMNs where the configuration is valid are HPLMN, PLMNs equi valent to HPLMN, and visited PLMNs of the home country. Access Identity 1 is also v alid when the UE is explicity authorized by the network based on specific configured PLMNs inside and outside the home country. | |
| NOTE 2: Access Identity 2 is used by UEs configured for MCS, in the PLMNs where the config uration is valid. The PLMNs where the configuration is valid are HPLMN or PLMNs e quivalent to HPLMN and visited PLMNs of the home country. Access Identity 2 is als o valid when the UE is explicity authorized by the network based on specific configu red PLMNs inside and outside the home country. | |
| NOTE 3: Access Identities 11 and 15 are valid in Home PLMN only if the EHPLMN list is not pr esent or in any EHPLMN. Access Identities 12, 13 and 14 are valid in Home PLMN an d visited PLMNs of home country only. For this purpose, the home country is define d as the country of the MCC part of the IMSI. | |

**[Table 2]**

| Access Categ ory number | Conditions related to UE | Type of access attempt |
|---|---|---|
| 0 | All | MO signalling resulting from pa ging |
| 1 (NOTE 1) | UE is configured for delay tolerant service and subject to access control for Access Category 1, which is judged based on rela tion of UE's HPLMN and the selected PLM N. | All except for Emergency |
| 2 | All | Emergency |
| 3 | All except for the conditions in Access Ca tegory 1. | MO signalling on NAS level res ulting from other than paging |
| 4 | All except for the conditions in Access Ca tegory 1. | MMTEL voice (NOTE 3) |
| 5 | All except for the conditions in Access Ca tegory 1. | MMTEL video |
| 6 | All except for the conditions in Access Ca tegory 1. | SMS |
| 7 | All except for the conditions in Access Ca tegory 1. | MO data that do not belong to a ny other Access Categories (NO TE 4) |
| 8 | All except for the conditions in Access Ca tegory 1 | MO signalling on RRC level res ulting from other than paging |
| 9-31 | | Reserved standardized Access Categories |
| 32-63 (NOTE 2) | All | Based on operator classificatio n |
| NOTE 1: The barring parameter for Access Category 1 is accompanied with information that define whether Access Category applies to UEs within one of the following categori es: | | |
| a) UEs that are configured for delay tolerant service; | | |
| b) UEs that are configured for delay tolerant service and are neither in their HPLM N nor in a PLMN that is equivalent to it; | | |
| c) UEs that are configured for delay tolerant service and are neither in the PLMN li sted as most preferred PLMN of the country where the UE is roaming in the operator-define d PLMN selector list on the SIMIUSIM, nor in their HPLMN nor in a PLMN that is equivalent t o their HPLMN. When a UE is configured for EAB, the UE is also configured for delay tolera nt service. In case a UE is configured both for EAB and for EAB override, when upper layer indicates to override Access Category 1, then Access Category 1 is not applicable. | | |
| NOTE 2: When there are an Access Category based on operator classification and a standard ized Access Category to both of which an access attempt can be categorized, and the standa rdized Access Category is neither 0 nor 2, the UE applies the Access Category based on oper ator classification. When there are an Access Category based on operator classification and a standardized Access Category to both of which an access attempt can be categorized, and the standardized Access Category is 0 or 2, the UE applies the standardized Access Categor y. | | |
| NOTE 3: Includes Real-Time Text (RTT). | | |
| NOTE 4: Includes IMS Messaging. | | |

At this time, as an example, the NAS layer may determine the above-described access category based on the access of the terminal, and transmit the determined access category to the AS layer. Additionally, a base station may broadcast information related to the access category. As a specific example, when barring (or blocking) is applied in relation to a specific access category, information related to the access category may include barring factor information and barring time information for the specific access category based on congestion control. At this time, when a terminal that has received the broadcasted access category information may perform an access attempt in consideration of the barring factor information and the barring time information in a situation corresponding to the specific access category based on the above-described information. As an example, the barring factor information may be information about the probability of the terminal's access attempt, and the barring time information may be information about the access attempt barring time of the terminal. That is, the terminal may perform an access attempt based on the above-described information. The network may control the access of the terminal through the above-described information, and through this, terminal access may be performed taking network congestion into account. As another example, an access category may be added in a new system (e.g., rel 16) compared to the existing system (e.g., rel 15). For example, in Table 2 above, 9 to31 may be reserved values, but in Table 3 below, access categories 9 and 10 are added and 11 to 31 may be set to reserved values. Additionally, as an example, reserved values for the access category may be added even in a new system in the future based on the access attempt situation of the terminal.

**[Table 3]**

| Access Catego ry number | Conditions related to UE | Type of access attempt |
|---|---|---|
| 0 | All | MO signalling resulting from pagin g |
| 1 (NOTE 1) | UE is configured for delay tolerant service and subject to access control for Access Category 1, which is judged based on rela tion of UE's HPLMN and the selected PLM N. | All except for Emergency, or MO e xception data |
| 2 | All | Emergency |
| 3 | All except for the conditions in Access Ca tegory 1. | MO signalling on NAS level resulti ng from other than paging |
| 4 | All except for the conditions in Access Ca tegory 1. | MMTEL voice (NOTE 3) |
| 5 | All except for the conditions in Access Ca tegory 1. | MMTEL video |
| 6 | All except for the conditions in Access Ca tegory 1. | SMS |
| 7 | All except for the conditions in Access Ca tegory 1. | MO data that do not belong to any other Access Categories (NOTE 4) |
| 8 | All except for the conditions in Access Ca tegory 1 | MO signalling on RRC level resulti ng from other than paging |
| 9 | All except for the conditions in Access Ca tegory 1 | MO IMS registration related signall ing (NOTE 5) |
| 10 (NOTE δ) | All | MO exception data |
| 11-31 | | Reserved standardized Access Cat Pqories |
| 32-63 (NOTE 2) | All | Based on operator classification |
| NOTE 1: The barring parameter for Access Category 1 is accompanied with information that defi ne whether Access Category applies to UEs within one of the following categories: | | |
| a) UEs that are configured for delay tolerant service; | | |
| b) UEs that are configured for delay tolerant service and are neither in their HPLMN nor in a PLMN that is equivalent to it; | | |
| c) UEs that are configured for delay tolerant service and are neither in the PLMN listed as most preferred PLMN of the country where the UE is roaming in the operator-defined PLMN selector list on the SIMIUSIM, nor in their HPLMN nor in a PLMN that is equivalent to their HPLM N. | | |
| When a UE is configured for EAB, the UE is also configured for delay tolerant service. I n case a UE is configured both for EAB and for EAB override, when upper layer indicates to ove rride Access Category 1, then Access Category 1 is not applicable. | | |
| NOTE 2: When there are an Access Category based on operator classification and a standardize d Access Category to both of which an access attempt can be categorized, and the stan dardized Access Category is neither 0 nor 2, the UE applies the Access Category based on operator classification. When there are an Access Category based on operator classi fication and a standardized Access Category to both of which an access attempt can be categorized, and the standardized Access Category is 0 or 2, the UE applies the standa rdized Access Category. | | |
| NOTE 3: Includes Real-Time Text (RTT). | | |
| NOTE 4: Includes IMS Messaging. | | |
| NOTE 5: Includes IMS registration related signalling, e.q. IMS initial registration, re-registration, a nd subscription refresh. | | |
| NOTE 6: Applies to access of a NB-IoT-capable UE to a NB-IOT cell connected to 5GC when the U E is authorized to send exception data. | | |

At this time, as an example, a case where a terminal using a 3GPP system requires access to a network to receive a specific service may be considered. When access to the network is required, there may be a transition from a CM-IDLE state to a CM-CONNECTED state. As another example, there may be a transition from an RRC-INACTIVE state to an RRC-CONNECTED state. Another example, there may be a case where user plane resources for a PDU session are requested in a deactivated state where user plane resources are not allocated, and the case where access to the network is required may not be limited to the above-described embodiment. At this time, as described above, the RRC layer of the terminal may perform access category check depending on the type of the access attempt of the terminal. As an example, the terminal may obtain the terminal's access identifier and barring information for each corresponding access category based on broadcasted barring information. As an example, barring information may be broadcast through a system information block (SIB), but is not limited to a specific embodiment.

At this time, as an example, the terminal may perform an access attempt based on the received barring information. As a specific example, when a voice call occurs and the terminal performs an access attempt, the access category number may be defined as 4 based on Table 3 described above. At this time, the NAS layer may inquire of the RRC layer about whether access category number 4 is barred based on the determined access category number 4. At this time, the RRC layer may determine whether to bar access category number 4 based on the baring information described above and transmit the result information to the NAS layer. As an example, if the barring information includes information indicating that the above-described access category number 4 is barred, the RRC layer of the terminal may bar access category number 4 based on the barring information and transmit the barring result information to the NAS layer. However, this is only an example and is not limited to the above-described embodiment. Here, a request for access of the actual terminal may be transmitted to the RRC only when the NAS layer receives result information indicating that the corresponding access category is not barred.

At this time, as described above, the access category value may be set differently in the existing system and the new or future system. In the following, the release will be described for each system, but it may not be limited to this. Here, as an example, the release applied to and implemented in the terminal and the release to applied and implemented in the network may be different. As a specific example, the release applied to and implemented in the terminal and the release applied to and implemented in the network may be different based on the roaming situation of the terminal or other reasons, and may not be limited to a specific embodiment.

Here, a case where the release applied to and implemented in the terminal is rel-x, the release applied to and implemented in the network connected to the terminal is rel-y, and x>y may be considered. As an example, x,y may be release 15 or higher based on the 3GPP release, but may not be limited thereto. As a specific example, a case where the release applied to and implemented in the terminal is rel-16, and the release applied to and implemented in the network is rel-15 may be considered. However, this is only an example for convenience of description and is not limited to the above-described embodiment. In other words, it may be applied equally if the release applied to and implemented in the terminal is higher than the release applied to and implemented in the network. At this time, because the release of the terminal is higher, more access categories may be defined. As an example, the access category defined in the network may be a value of 0 to 8 based on Table 2 above, and the access category defined in the terminal may be a value of 0 to 10 based on Table 3 above. However, this is only one example and is not limited thereto. That is, the standard access categories defined in the terminal may be more than the standard access categories defined in the network.

At this time, as an example, the network may transmit SIB information to apply the above-described unified access category (unified access control, hereinafter UAC). At this time, the access category (hereinafter AC) barring information that may be broadcast by the network may include on the standardized AC corresponding to AC 0 to 8 and the operator defined access category (hereinafter referred to as ODAC) information corresponding to AC 32 to 63. Here, when congestion occurs or is expected to occur in the network, barring may be applied to a specific AC. As an example, barring information for applying barring may include barring factor and barring time information, as described above.

At this time, for example, since the standardized AC defined in the network and the standardized AC defined in the terminal may be different, even if it matches the conditions of the barring category intended by the network, the terminal may correspond to a different AC. As a specific example, based on Table 2 (or rel 15), IMS signaling may need to use AC 7 (MO data). On the other hand, based on Table 3 (or rel 16), AC 9 may be used as signaling related to IMS registration. In the case described above, the network bars a specific AC, but the terminal selects a different AC, so barring may not be performed contrary to the network's intention. In other words, since the network intends to bar the terminal's access, but the terminal selects a different AC, a barring bypass occurs and thus an access attempt to the network may be performed.

For example, although the network has activated barring for AC 7, the rel-16 terminal may allocate AC 9 rather than AC 7 for IMS-related signaling. At this time, since the network cannot transmit barring information of AC9 and cannot bar the access attempt of the terminal using AC9, the barring check for the access attempt may be passed in any case. In other words, if the release applied to the terminal is higher than the release applied to the network and the terminal may use an AC that is not supported by the network, a problem that the network cannot bar the access attempt corresponding to the AC and unconditionally passes the barring check may occur, and the problem may be referred to as an under barring issue. However, it may not be limited to that name.

At this time, as an example, the standardized AC values may be different in the above-mentioned Tables 2 and 3, and the standardized AC values may also be different in systems to be introduced in the future. Additionally, as an example, the same under barring issue may occur even in a network that does not implement support for a specific access category based on operator's selection. As another example, the above-described under barring issue may occur even when the AC pool implemented in the network and the AC pool implemented in the terminal are different.

Hereinafter, a method of solving the under barring problem which may occur when the release supported by the terminal is higher than the release supported by the network (especially gNB, ng-eNB) and the AC implemented in the terminal is not supported by the network will be described.

As an example, a base station (e.g., gNB or ng-eNB) may broadcast a system information block (SIB) including barring information. As an example, the SIB may be SIB1, but may not be limited thereto.

At this time, the barring information may include AC information to which barring will be applied, and barring factor and barring time information of the AC. Additionally, as an example, barring information may further include other information, and is not limited to the above-described embodiment. At this time, the terminal may receive the SIB and recognize the AC information to which barring will be applied and the barring factor and barring time information of the AC based on the barring information included in the SIB. As an example, the terminal may determine that all access is basically allowed for an AC not included in the SIB. At this time, as described above, since the release supported by the terminal is higher than the release supported by the network, the network may not be able to configure barring information for the AC supported by the terminal, and the under barring issue described above may occur. In consideration of the above, the base station (or node B) may further include not only barring information but also an allowed standardized AC list in the SIB so that the terminal may freely perform the access attempt during the barring check process.

At this time, the terminal may perform the access attempt for the standardized AC included in the allowed standardized AC list without any restrictions. In other words, the allowed standardized AC list may be an AC list that allows access attempts without any restrictions. Accordingly, the RRC layer of the terminal may allow an access attempt without separate barring during barring check for ACs included in the allowed standardized AC list.

Here, as an example, ACs matching the allowed standardized AC list and barring information included in the SIB may be mutually exclusive. That is, the AC included in the SIB barring information may be an AC that requires barring check based on barring factor information and barring time information, and therefore may not be included in the allowed standardized AC list.

As a specific example, when access barring is applied to AC 3, the base station (or node B) may broadcast a SIB containing barring information of AC3. For example, if the standardized AC supported by the network is from 0 to 8 (e.g., rel 15), the base station (node B) may include eight entries "AC0, AC1, AC2, AC4, AC5, AC6, AC7, AC8" in the allowed standardized AC list.

On the other hand, if the network supports 10 standardized ACs from 0 to 10 excluding 9, the base station (or node B) may include 9 entries "AC0, AC1, AC2, AC4, AC5, AC6" in the allowed standardized AC list.

Additionally, as an example, the allowed standardized AC list may be defined in SIB1 described above. As another example, the allowed standardized AC list may be implemented as an additional element of one of the currently defined SIBs. As another example, the allowed standardized AC list may be implemented through a new SIB (SIBx), and may not be limited to a specific embodiment.

The terminal may obtain the allowed standardized AC list along with barring information through the SIB. Through this, the terminal may perform the barring check more clearly. As a specific example, a case where the NAS layer requests an access attempt to an AC that is not included in the barring information may be considered. At this time, if the AC is included in the allowed standardized AC list, the network may allow the terminal's access attempt based on the AC. On the other hand, if the AC is not included in the allowed standardized AC list, the RRC layer may respond to the NAS by setting the AC to barred since it is a request for an AC that has not been explicitly allowed. At this time, as an example, the barring time may be determined to be a random value. The barring time may be selected within a preconfigured basic range or defined basic range, but may not be limited to a specific form. Through the above, if IMS signaling needs to be transmitted by applying access control in a situation where the network is congested or congestion is expected, the access control may be bypassed to allow the user terminal to continuously use services such as essential voice call.

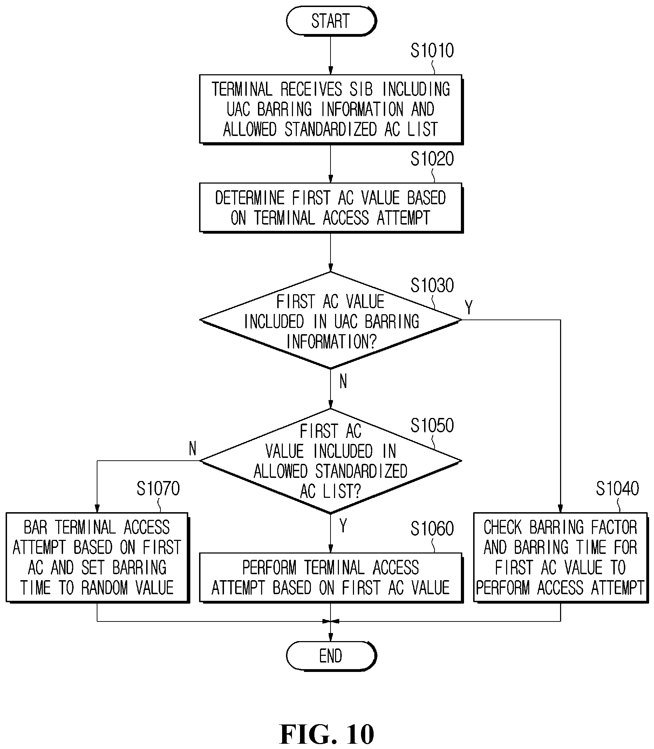

FIG. 10 is a view illustrating a method of operating a terminal applied in the present disclosure.

Referring to FIG. 10, the terminal may receive a SIB including UAC barring information and an allowed standardized AC list (S1010). As an example, as described above, UAC barring information may include at least one AC information. Additionally, the UAC barring information may include barring factor and barring time information corresponding to each of at least one AC. Next, the terminal may determine a first AC value based on an access attempt (S1020). As an example, the terminal may determine the first AC value based on a type of access attempt based on Table 2 or Table 3 described above. The NAS layer of the terminal may determine the first AC value based on the type of access attempt and forward information about this to the AS layer. Thereafter, in the AS layer, the terminal may perform barring check. At this time, for example, when the barring check is performed, if the terminal may check whether the first AC value is included in the UAC barring information included in the SIB (S1030). At this time, the first AC value is included in the UAC barring information, the UAC barring information may include barring factor information and barring time information corresponding to the first AC value. At this time, the terminal may check the barring factor information and barring time information for the first AC value and perform an access attempt based on the checked information (S1040). On the other hand, if the first AC value is not included in the UAC barring information, the terminal may check whether the first AC value is included in the allowed standardized AC list (S1050). As an example, the allowed standardized AC list may be generated based on the AC value supported and implemented by the network, and may be a set of ACs in which the access attempt of the terminal is not barred. Therefore, if the first AC value is included in the allowed standardized AC list, the access attempt of the terminal based on the first AC value may be allowed (S1060). On the other hand, if the first AC value is not included in the allowed standardized AC list, the access attempt of the terminal corresponding to the first AC value may be barred. At this time, the barring time for the terminal's access attempt corresponding to the first AC value may be randomly determined to be a specific value among preconfigured values, as described above.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of operating a terminal in a wireless communication system, the method comprising:
receiving a system information block (SIB) transmitted from a base station;
determining an access category (AC) value based on a type of access attempt of the terminal; and
performing an access attempt based on information included in the SIB and the AC value.

2. The method of claim 1, wherein the SIB comprises unified access category (UAC) barring information and allowed standardized AC list information.

3. The method of claim 2, wherein the UAC barring information comprises at least one of at least one AC information to which barring is applied, barring factor information of each of the at least one AC information, and barring time information of each of the at least one AC information.

4. The method of claim 3,
wherein the barring factor information of each of the at least one AC information is probability information of the access attempt of the terminal based on the AC, and
wherein the barring time information of each of the at least one AC information is time information when the access attempt of the terminal is barred based on the AC.

5. The method of claim 2,
wherein the allowed standardized AC list information is configured based on an AC supported and implemented in a network, and
wherein the access attempt of the terminal based on the AC corresponding to the allowed standardized AC list is always allowed.

6. The method of claim 5, wherein based on the AC value based on the type of access attempt of the terminal being a first AC value, the terminal checks whether the first AC value is included in the UAC barring information.

7. The method of claim 6, wherein based on the first AC value being included in the UAC barring information, the access attempt is performed based on barring factor information of the first AC value included in the UAC barring information and barring time information of the first AC value.

8. The method of claim 6, wherein based on the first AC value being not included in the UAC barring information, the terminal checks whether the first AC value is included in the allowed standardized AC list.

9. The method of claim 8, wherein based on the first AC value being included in the allowed standardized AC list, the access attempt of the terminal based on the first AC value is allowed.

10. The method of claim 8, wherein based on the first AC value being not included in the allowed standardized AC list, the access attempt of the terminal corresponding to the first AC value is barred.

11. The method of claim 10, wherein based on the access attempt of the terminal corresponding to the first AC value being barred, a barring time for the access attempt of the terminal corresponding to the first AC value is set to a random value of preconfigured values.

12. The method of claim 1, wherein the SIB is SIB1.

13. A terminal operating in a wireless communication system, the terminal comprising:
at least one transceiver;
at least one processor; and
at least one memory operably connected to the at least one processor and storing instructions that, when executed, cause the at least one processor to perform a specific operation,
wherein the specific operation comprises:
controlling the transceiver to receive a system information block (SIB) transmitted from a base station,
determining an access category (AC) value based on a type of access attempt of the terminal, and
performing an access attempt based on information included in the SIB and the AC value.

14. A method of operating a base station in a wireless communication system, the method comprising:
transmitting a system information block (SIB) to a terminal; and
receiving an access attempt request from the terminal,
wherein the terminal determines an access category (AC) value based on a type of access attempt of the terminal and receives the access attempt request from the terminal based on information included in the SIB and the AC value.

15. A network operating in a wireless communication system, the network comprising:
at least one transceiver;
at least one processor; and
at least one memory operably connected to the at least one processor and storing instructions that, when executed, cause the at least one processor to perform a specific operation,
wherein the specific operation comprises:
controlling the transceiver to transmit a system information block (SIB) to a terminal, and
controlling the transceiver to receive an access attempt request from the terminal,
wherein the terminal determines an access category (AC) value based on a type of access attempt of the terminal and receives the access attempt request from the terminal based on information included in the SIB and the AC value.

16. An apparatus comprising at least one memory and at least one processor functionally connected to the at least one memory,
wherein the at least one processor controls the apparatus to:
receive a system information block (SIB) transmitted from a base station,
determine an access category (AC) value based on a type of access attempt of the apparatus, and
perform an access attempt based on information included in the SIB and the AC value.

17. A non-transitory computer-readable medium storing at least one instruction, the non-transitory computer-readable medium comprising the at least one instruction executable by a processor,
wherein the at least one instruction performs control to:
receive a system information block (SIB) transmitted from a base station,
determine an access category (AC) value based on a type of access attempt of an apparatus, and
perform an access attempt based on information included in the SIB and the AC value.
